# EUROPEAN PATENT SPECIFICATION

(11) **EP 3 057 838 B1**
(45) Date of publication and mention of the grant of the patent: **28.02.2018**
(21) Application number: 14784455.9
(22) Date of filing: 15.10.2014
(51) Int. Cl.: B60R 21/216, F16B 5/06

(54) **FASTENER FOR TWO FASTENING STATES**
BEFESTIGUNGSELEMENT FÜR ZWEI BEFESTIGUNGSZUSTÄNDE
ÉLÉMENT DE FIXATION PERMETTANT DEUX ÉTATS DE FIXATION

(30) Priority: 16.10.2013 DE 102013111400
(43) Date of publication of application: 24.08.2016
(73) Proprietor: Newfrey LLC, New Britain, CT 06053 (US)
(72) Inventor: ALBACH, Jens, 35394 Gießen (DE); SENG, Hans-Peter, 35394 Gießen (DE); HANFT, Matthias, 35394 Gießen (DE)
(74) Representative: SBD IPAdmin
(86) International application number: PCT/EP2014/072093
(87) International publication number: WO 2015/055702

(56) References cited:
- EP-A1- 2 518 338
- US-A- 5 934 729
- US-A1- 2004 049 895

## Description

The invention relates to a fastener for two fastening states having a receptacle part that has a receiving aperture and fastening means for attachment to a first component, having an insertion part with a pin-like plug-in section that can be inserted with an insertion end of the plug-in section foremost into the receiving aperture of the receptacle part and that has, at a fastening end opposite the insertion end, fastening means for attaching a second component, wherein, in a first fastening state, the plug-in section of the insertion part is inserted deep into the receiving aperture and the insertion part is releasably connected to the receptacle part by latching first retaining means, and the first retaining means are designed such that the insertion part can be displaced by a release force into a second fastening state connected to the receptacle part.

Fasteners of the specified type are used in the passenger compartment of motor vehicles for attaching trim parts behind which may be located an airbag. The fastening for trim parts of this nature must be designed in such a way that the trim parts can release in the event of activation of the airbag in order to give the airbag space to deploy. Thus, on the one hand, the fastener is required to fasten the trim part to the vehicle such that it is securely seated in a first fastening state. On the other hand, when a predetermined release force acting on the trim part is reached in the event that the airbag is deployed, the fastener must be able to be released from the first fastening state and permit a movement of the trim part distant from the airbag so that the airbag can deploy properly. In this case, it is additionally necessary for the trim part to be secured by the fastener again after it has traversed the distance releasing the airbag so that it cannot fly into the passenger compartment of the vehicle, and passengers cannot be injured. The fastener must therefore permit a second fastening state in which the trim part is fastened in a position on the vehicle that is different from the first fastening state.

In a fastener of the abovementioned type known from US 6,431,585 B1, the receptacle part is a cylindrical sleeve that has a flange at one and is fastened in an aperture in a vehicle part by means of locking fingers. It is possible to insert into the sleeve a pin that is provided at a head end with two parallel flanges, between which is attached a trim part. A flange of the pin is connected to the flange of the sleeve by a flexible strap. In the connected first fastening state, a thicker section of the pin is held by a slotted and expandable end of the sleeve. When an airbag deploys, the pin is pulled out of the sleeve, while the strap retains the pin and the trim attached thereto, thereby restricting their movement into the passenger compartment of the vehicle.

Another fastener of the specified type is known from US 7,178,205 B2, in which the receptacle part has a metal clip that can be secured in an aperture in a plate. Located in the clip is an insert made of plastic, to which the end of a flexible strap is attached. Attached to the other end of the strap is a U-shaped connector, which can be connected to a component. The connector has a pin with an enlarged end that can be releasably connected in a bore having radially deflectable latching elements, said bore being located in the insert arranged in the clip. In this known fastener as well, when the pin is detached from the clip by deployment of an airbag, the component continues to be held by the clip by means of the strap and connector.

Known from EP 2,357,369 A2 is a fastener for securing a component to a body, which has a shaft with a fastening end and a receiving end, wherein a first securing means extends from the insertion end of the shaft, and a second securing means is implemented on the circumference of the shaft and connects the fastening end to the component. Using the second securing means, the component can be releasably secured in an aperture in the body. The first securing means has a barb, on a flexible stalk, that holds the fastener and the component connected thereto securely in the aperture of the body when the fastener has pulled out of the aperture due to the deployment of an airbag and after the second securing means has released.

Further known from US 2004/0049895 A1 is a fastener according to the preamble of claim 1.

In the prior art fasteners, the travel of a secured trim part is indeed limited in the case of deployment of an airbag, but the movement of the trim part and its ultimate position in the second fastening state are quite uncertain because of the flexible straps or stalks that hold the component at that point. However, installation situations exist in which it is desirable to have greater restriction of movement of a component part or trim part during displacement from the first fastening state to the second and to have more precise positioning of the part in the second fastening state.

Consequently, the object of the invention is to create a fastener of the aforementioned type that allows controlled movement of the insertion part during displacement from the first fastening state into the second fastening state, and in which the insertion part assumes a defined position in the second fastening state.

The object is attained according to the invention by a fastener with the features specified in claim 1. Advantageous further developments of the fastener are specified in the dependent claims.

According to the invention, the fastener with two operating states comprises a receptacle part that has a receiving aperture and fastening means for fastening to a first component, an insertion part with a pin-like plug-in section that can be inserted with an insertion end of the plug-in section foremost into the receiving aperture of the receptacle part and that has, at a fastening end opposite the insertion end, fastening means for fastening a second component, wherein, in a first fastening state, the plug-in section of the insertion part is inserted deep into the receiving aperture and the insertion part is releasably connected to the receptacle part by latching first retaining means, and the first retaining means are designed such that the insertion part can be displaced by a release force into a second fastening state in which the insertion part with the plug-in section is arranged in the receiving aperture to engage less deeply therewith and is secured in the receiving aperture by second retaining means, wherein the receptacle part and the insertion part have cooperating brake means that produce a decelerating force that opposes the displacement during displacement of the insertion part from the first fastening state into the second state..

The fastener according to the invention has the advantage that the plug-in section of the insertion part remains in the receptacle part during displacement from the first insertion state into the second fastening state so that it can be guided by the receptacle part as it is displaced. In the second fastening state, the displaced plug-in section is retained in the receiving aperture by the second retaining means, and as a result its location can be precisely positioned. Guidance of the insertion part in the receptacle part and its positioning in the second fastening state carry over to the component held by the insertion part, and determine and restrict its movement and displaced position during deployment of an airbag.

Further, the invention has the advantage that the energy acting on the insertion part during the explosive deployment of the airbag is at least partially absorbed by the braking means as early as during displacement of the insertion part into the second fastening state, so that the impact forces arising at the second retaining means upon reaching the second fastening state are reduced. The loads on the second retaining means and on the parts supporting them are reduced in this way, and the fastener can be made commensurately smaller and lighter.

The braking of the movement of the insertion part during displacement into the second fastening state is especially important when only relatively short distances are available to the fastener for displacement from one fastening state into the other, and relatively high energy must be absorbed.

In an advantageous embodiment of the fastener equipped with braking means, according to the invention the plug-in section can have a wedge-shaped braking section that is tapered toward the fastening end, wherein, in the first fastening state, a deformable section of the receptacle part bears against the wedge-shaped braking section, which can be deformed by the wedge-shaped braking section during displacement of the insertion part into the second fastening state. Since an airbag must be replaced after deployment, and this generally also requires the trim part to be removed, it is also possible, in order to achieve a large braking effect, to permit deformation of the deformable section that is extensive enough that the fastener must also be replaced along with the airbag.

In order to retain the insertion part in the receiving aperture of the receptacle part, the plug-in section can have resiliently deflectable locking fingers extending toward the fastening end. Depending on the design of the receptacle part, the locking fingers can constitute either the first or the second retaining means.

The insertion part can also have, between the plug-in section and the fastening end, a plate-like flange that bears against the receptacle part in the first fastening state and supports the insertion part on the receptacle part in the insertion direction. The flange is suitable for transmitting installation forces to the receptacle part and can serve to fasten the insertion part to the receptacle part and to align the insertion part in a defined angular position with respect to the receptacle part.

According to another proposal of the invention, a simple receptacle part that can be manufactured economically and requires little space can take the form of a flat plate with the receiving aperture arranged in its center, wherein the plate has catches that form first retaining means on one insertion side by which means the flange of the insertion part can be secured on the receptacle part in such a manner that it can only be released by a release force dependent on the design of the retaining means.

Preferably the receptacle part in this design can be composed of two identical plate parts that have, on their face, connecting means that plug together, by which means they are connected to one another. The identical plate parts of the receptacle part can be manufactured easily and economically from plastic. The plate parts can be connected to one another around the plug-in section of an insertion part, by which means the insertion part can be joined to the receptacle part to form a preassembled and, if appropriate, nondetachable assembly unit.

In order to be fastened in the aperture of a component, for example a part of a motor vehicle body, the receptacle part can have, on a supporting side opposite the insertion side, retaining elements adjacent to the edge of its receiving aperture with resiliently deflectable locking fingers that extend behind the aperture edge on the back of the component after insertion of the retaining elements.

In another advantageous embodiment of the invention, the receptacle part can have a housing with a chamber into which the plug-in section of the insertion part can be inserted, wherein a resilient retaining element is arranged in the chamber, by which means the plug-in section of the insertion part can be secured in the second fastening state. In this design, the plug-in section can have a shoulder near the insertion end with a locking surface facing the fastening end, with which the plug-in section is supported on the resilient retaining element to keep it from being pulled out of the receptacle part in the second fastening state.

In the first fastening state, the plug-in section of the insertion part can extend all the way through the chamber of the receptacle part and be supported on the housing on the side of the housing facing away from the insertion side by means of the resiliently deflectable locking fingers to prevent release.

In another embodiment of the invention, the resilient retaining element can be supported on the plug-in section of the insertion part and on the housing in such a manner that when the insertion part is displaced from the first fastening state into the second state, a decelerating force opposing its displacement can be produced at the insertion part.

In order to achieve this effect, it is advantageous for the resilient retaining element to have a rigid, wedge-shaped clamping section that extends transversely to the direction of insertion along an edge of the insertion aperture and that has wedge surfaces on the side facing the insertion aperture and a contact surface for the insertion part on the opposite side, wherein the clamping section can be inserted into a gap between the plug-in section of the insertion part and the edge of the insertion aperture, and is designed to cause a clamping of the plug-in section in the insertion aperture opposing the displacement of the plug-in section. As a result of this design, a relatively high clamping force and a commensurately strong braking action can be achieved in a simple way when the insertion part is displaced.

Preferably, the resilient retaining element has two wedge-shaped clamping sections in a symmetrical parallel arrangement, which are connected to each other by spring elements at both their ends, wherein an aperture into which the plug-in section of the insertion part can be inserted is formed between the clamping sections and the spring elements.

In order to be fastened in the chamber, according to the invention, the resilient retaining element can have resilient arms on opposite sides that each extend outward from the ends of the clamping sections and toward one another, whose adjacent ends engage with retention apertures in opposite walls of the chamber and hold the retaining element in contact with a rearward wall of the chamber in the direction of insertion. As a result of this fastening, the retaining element can deform resiliently in the requisite fashion when the plug-in pin is inserted into the receptacle part. In addition, the resilient arms support the pressing of the clamping sections against the plug-in pin and permit an axial displacement of the retaining element toward the insertion aperture of the housing when the insertion part is moved into the second fastening state. As a result of the engagement of the resilient arms with the retention apertures, the retaining element is releasably fastened in the chamber of the receptacle part. Alternatively, the retaining element can be manufactured as a single piece with the receptacle part.

The invention is explained in detail below using exemplary embodiments that are shown in the drawings. They show:
- Figure 1: an exploded view of a first exemplary embodiment of a fastener according to the invention,
- Figure 2: a first perspective view of the receptacle part of the fastener from Figure 1,
- Figure 3: a perspective cross-sectional view of the insertion side of the receptacle part from Figure 2,
- Figure 4: a perspective view of the fastener from Figure 1 in ready-to-assemble position,
- Figure 5: a perspective view of the fastener from Figure 1 in the assembled state,
- Figure 6: perspective view of the fastener from Figure 1 with a longitudinal section through the receptacle part,
- Figure 7: a longitudinal section through the fastener from Figure 1 in the first fastening state,
- Figure 8: a longitudinal section through the fastener from Figure 1 in the second fastening state,
- Figure 9: an exploded view of a second exemplary embodiment of a fastener according to the invention,
- Figure 10: a perspective view of the insertion part of the fastener from Figure 9,
- Figure 11: a perspective view of a plate part for forming the receptacle part of the fastener from Figure 9,
- Figure 12: a perspective view of the fastener from Figure 9 in the assembled state,
- Figure 13: a perspective view of the fastener from Figure 9 in the first fastening state,
- Figure 14: a perspective view of the fastener from Figure 9 in the second fastening state.

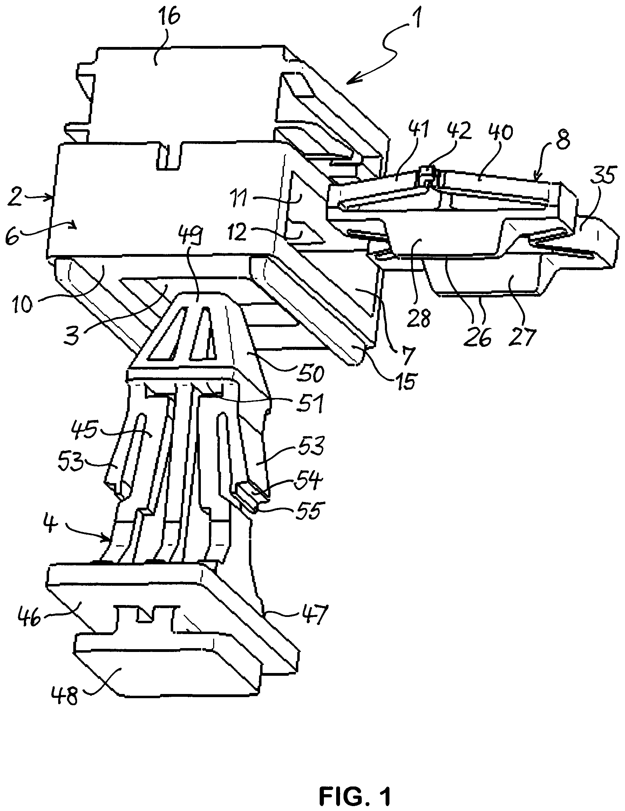

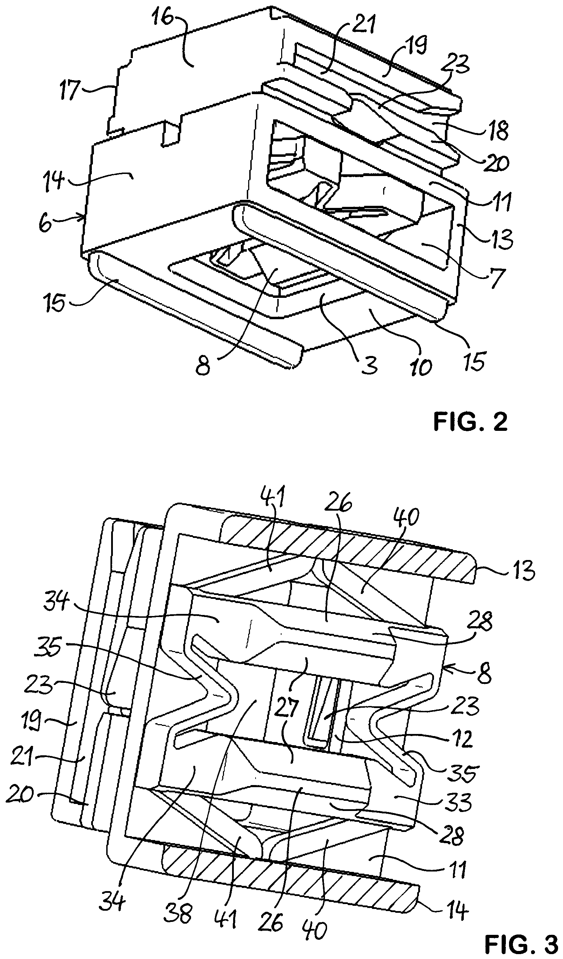

Figures 1 through 8 show a fastener 1 that is suitable for fastening a trim part intended to cover an airbag in the passenger compartment of a motor vehicle. The fastener 1 consists of a receptacle part 2 with a receiving aperture 3 and a pin-like insertion part 4, which can be inserted into the receiving aperture 3 of the receptacle part 2 and affixed therein. The receptacle part 2 is in the form of a cuboid housing 6, which surrounds a chamber 7. The chamber 7 serves to accommodate a resilient retaining element 8. On its front face, the housing 6 has a front wall 10, in the center of which is located the receiving aperture 3. The receiving aperture 3 is rectangular, and its edges are parallel to the housing edges. Located opposite the front wall 10 is a rear wall 11, which has a rectangular aperture 12 at least as large as the receiving aperture 3, as can be seen in Figure 3. The walls 10, 11 are connected to one another by mutually opposite side walls 13, 14. Arranged on the front face of the front wall 10 are two ribs 15, which are perpendicular to the side walls 13, 14.

On its back, the housing 6 has a rectangular frame 16, which serves to fasten the housing 6 to a trim part. The frame 16 has two parallel walls 17, 18, which each have grooves 21 formed by parallel ribs 19, 20 on their outer side; the grooves serve to accommodate parallel mounting rails of a trim part. Together with a center, open section, the ribs 20 adjacent to the rear wall 11 form a locking finger 23 by which means a mounting rail of the trim part can be secured in the groove 21. In place of the frame 16 described, other securing means may be attached to the housing 6, depending on the design of the trim part. The side walls 13, 14 of the housing 6 may also be used for attaching securing means, such as a groove located between ribs.

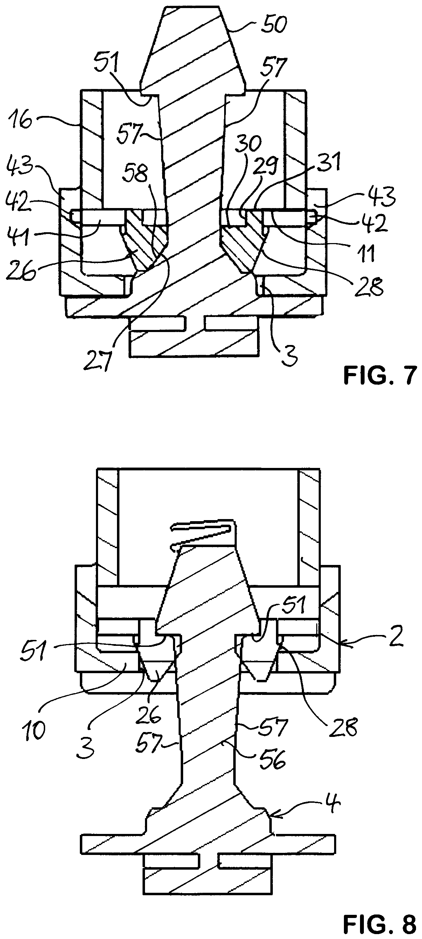

The chamber 7 is provided on two opposing sides with apertures that extend across the entire cross-section of the chamber. The resilient retaining element 8 can be inserted into the chamber 7 through each of the two apertures. The symmetrically designed retaining element 8 has two rigid, wedge-shaped clamping sections 26 that are arranged at a distance from one another and that run parallel to the side walls 13, 14 in the chamber 7, as shown in Figure 3. Each clamping section 26 has two wedge surfaces 27, 28 arranged at an angle to one another on the side facing the front wall 10, and these wedge surfaces diverge from one another in the direction of the rear wall 11 of the housing 6. On their side facing the rear wall 11, the clamping sections 26 are provided with a step 29, as shown in Figure 7, that is adjoined to the inside by a contact surface 30 and to the outside by a contact surface 31. The clamping sections 26 brace against the wall 11 with the contact surface 31. The contact surface 30, which is parallel to the wall 11, serves to retain the insertion part 4. The wedge-shaped clamping sections 26 are shorter in length than the corresponding length of the receiving aperture 3 so that they can enter the receiving aperture 3. At their ends, each of the clamping sections 26 has flattened end pieces 33, 34, at which they are connected to one another by V-shaped leaf springs 35, 36. The leaf springs 35, 35 hold the clamping sections 26 at a distance such that an aperture 38, which the insertion part 4 can enter, is present between them.

Also attached to the end pieces 33, 34 of the clamping sections 26 are resilient arms 40, 41, which extend at an angle to the clamping sections 26 toward the side walls 13, 14 and toward one another. The retaining element 8 in the chamber 7 is kept in contact with the rear wall 11 and centered by the resilient arms 40, 41. For this purpose, the resilient arms 40, 41 have, at their free ends, retaining fingers 42 that engage with apertures 43 in the center of the side walls 13, 14. The retaining fingers 42 of adjacent ends of the resilient arms 40, 41 are arranged one over the other in such a manner that one retaining finger lies on the outside, and as a result guides the ends of both resilient arms 40, 41 along the applicable side wall 13, 14 when the retaining element 8 is inserted into the chamber 7. The retaining element 8 is designed such that it can be primary molded as a single piece from thermoplastic material.

The insertion part 4 has an elongated, pin-like plug-in section 45 and a head 47 that bears a rectangular, plate-like flange 46. Affixed to the side of the flange 46 facing away from the head 47 is a T-shaped fastener 48. The fastener 48 is suitable for insertion into a fastening aperture with a keyhole-like design in a component of a motor vehicle body. At the opposite end, the plug-in section 45 has an insertion end 49 designed as a truncated pyramid 50 that tapers toward the end. The truncated pyramid 50 has a rectangular base adjacent to the plug-in section 45, and the freestanding edges of the longer sides of the base form locking surfaces 51 with which the insertion part 4 can be secured in the receptacle part 2.

The plug-in section 45 has a rectangular cross-sectional profile, and has at its short sides adjacent to the short sides of the truncated pyramid 50, resiliently deflectable locking fingers 53 that extend outward and toward the flange 46. Each locking finger 53 has at its free end a locking surface 54 and a stop rib 55 that adjoins the inner side of the locking finger 53 at the locking surface 54.

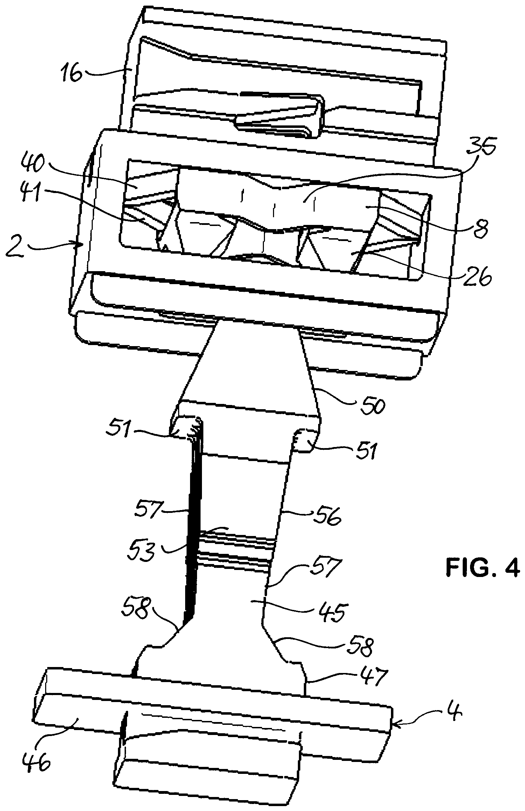

As can be seen in Figure 4, the plug-in section 45 forms, with the wide sides of its cross-section, a wedge-shaped braking section 56 with flat braking surfaces 57 that are angled with respect to the longitudinal axis of the plug-in section 45 such that their distance from the longitudinal axis decreases continuously toward the fastening end. Thus the braking section 56 forms a wedge between the braking surfaces 57 that is widest at the truncated pyramid 50 and becomes ever narrower toward the head 47. The braking surfaces 57 terminate at the head 47, which adjoins the braking surfaces 57 with oppositely inclined outside surfaces 58, and accordingly has a cross-section that increases toward the flange 46.

A trim part can be fastened to a vehicle body part using the fastener 1 in the following way: The fastening element 48 of the insertion part 4 is inserted into a fastening aperture in the body part in such a manner that the plug-in section 45 projects on the side of the body part intended for the trim part, and the flange 46 rests firmly against the body part. The receptacle part 2 is connected to the trim part by attaching the frame 16 to mounting rails of the trim part. With the receptacle part 2 foremost, the trim part is then placed on the plug-in section 45 of the insertion part 4 and pushed onto the body part until the final position is reached, in which the front wall 10 of the housing 6 rests against the flange 46 of the insertion part 4. Reaching of the final position is indicated by a sound that the locking fingers 53 produce by striking the stop ribs 55 at the edge of the aperture 12 in the rear wall 11 when snapping into the locked position.

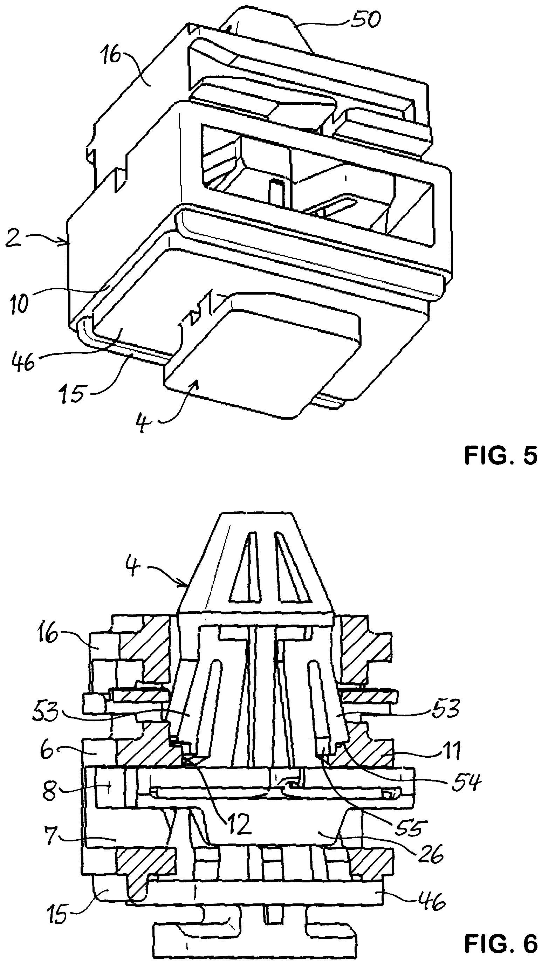

The first fastening state of the fastener 1 achieved in the manner described is shown in Figures 5 through 7 without the attached components. The plug-in section 45 here extends through the receiving aperture 3, the aperture 12 in the rear wall 11, and the aperture of the frame 16, and its truncated pyramid 50 projects out of the frame 16. The flange 46 resting against the front wall 10 is located between the ribs 15, which secure the receptacle part 2 against rotation relative to the insertion part 4. The locking fingers 53 brace against the outer side of the rear wall 11 of the housing 6 facing the frame by means of the locking surfaces 54. The stop ribs 55 project into the aperture 12 and contact the edge of the aperture. The clamping sections 26 of the retaining element 8 located in the chamber 7 bear against the braking surfaces 57 of the plug-in section 45, with the clamping surfaces 26 being pressed against the braking surfaces 57 with a spring force produced by the leaf springs 35, 35 and the resilient arms 40, 41. The wedge surfaces 27 of the clamping surfaces 26 rest on the outside surfaces 58 of the head 47.

As is evident from Figure 4, the clamping surfaces 26 are spaced a distance apart from one another that is significantly shorter than the greatest width of the truncated pyramid 50 measured in the same direction. During the process of insertion, therefore, the clamping sections 26 are pressed apart from one another by the truncated pyramid 50. This is made possible by the elastic deformability of the leaf springs 35, 35 and resilient arms 40, 41.

In the first fastening state shown in Figure 6, the angle of incidence and the spring force of the locking fingers 53, and the inclination of their locking surfaces 54, are configured such that, at a certain release force that tends to pull the insertion part 4 out of the receptacle part 2, the locking fingers 53 leave their locked position and enter the aperture 12 in the rear wall 11. If a fastened trim part is pushed away from the car body part, for example by deployment of an airbag, with a higher force of this nature, then in consequence the first fastening state brought about by the locking fingers 53 is released, and the insertion part 4 is displaced out of the first fastening state into the second fastening state shown in Figure 8.

During this displacement, the clamping sections 26 pressed against the braking surfaces 57 with a force are carried along by the movement of the insertion part 4, during which process they enter the receiving aperture 3 and come into contact with the edge of the receiving aperture 3 by means of the wedge surfaces 28. In the process, the resilient arms 40, 41 and their retaining fingers 42 slide out of the apertures 43. Since the clamping sections 26 are braced against the edge of the aperture by the wedge surfaces 28, they can now no longer follow the further movement of the insertion part 4, so that the plug-in section 45 with the braking surfaces 57 slides along the clamping sections 26, and due to its wedge shape, forces the clamping sections 26 apart in opposition to the resistance of the front wall 10 enclosing the receiving aperture 3. As a result, the housing 6 is deformed, and a clamping force that presses the clamping sections 26 against the braking surface 57 comes into being that increases with the progressive movement of the insertion part 4 and produces a continuously increasing braking action. As the braking forces increase, so does the force that loads the clamping sections 26 in the axial direction, with the result that the clamping sections can travel further into the receiving aperture 3, which likewise contributes to an increase in the clamping forces and hence in the braking action.

As a result of the interaction of the above-described means, a considerable portion of the energy displacing the insertion part is converted into deformation work and frictional heat, so that impact forces occurring when the second fastening state shown in Figure 8 is reached are substantially reduced. In this fastening state, the insertion part 4 is securely retained in the receptacle part 2 at the locking surfaces 51 by the wedged clamping sections 26.

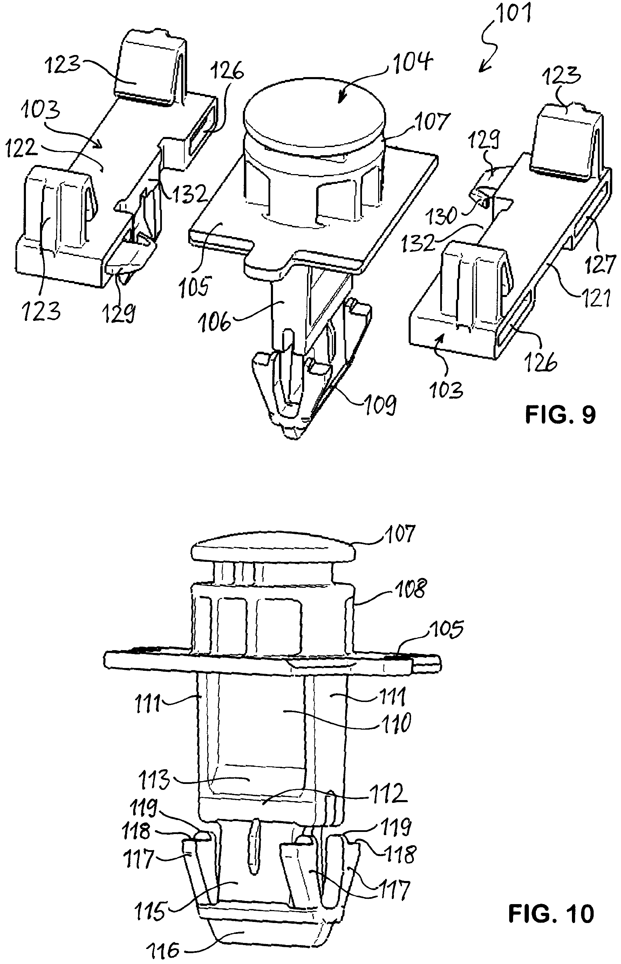

Figures 9 through 14 show another fastener 101 according to the invention for attaching trim parts that cover an airbag in the passenger compartment of a motor vehicle. The fastener 101 consists of three plastic parts, namely a receptacle part 102 composed of two identical parts 103, and an insertion part 104.

The insertion part 104 has an elongated shaft with a rectangular, plate-like flange 105, which divides the shaft into a plug-in section 106 that can be inserted into the receptacle part 102 and a fastening section 108 that is provided with a T-shaped head 107 at its free end. The head 107 is intended for fastening to a trim part that has a pocket or a keyhole-like aperture for accommodating the head 107. The plug-in section 106 has a front insertion section 109 and a rear guide section 110. The guide section 110 takes the form of a rectangular plate and is reinforced at its edges extending in the longitudinal direction by integrally molded guide strips 111 that are wider than the thickness of the plate, so that a recess is formed on both sides of the plate between the guide strips 111. At the end distant from the flange 105, the guide section 110 has a wedge-shaped braking section 112 that joins the ends of the guide strips 111 and that has, on mutually opposite sides, wedge surfaces 113 whose mutual spacing decreases as the distance from the flange 105 decreases.

The front insertion section 109 adjoins the braking section 112 with a plate-like connecting piece 115 on the side facing away from the wedge surfaces 113. The connecting piece 115 has a smaller width than the guide section 110. Integrally molded on the free end of the connecting piece 115 is a support section 116 that extends past the side surfaces of the connecting piece 115, where it bears on each side a pair of locking fingers 117 that extend so as to diverge in the direction of the guide section 110, and are resiliently deflectable toward one another. The locking fingers 117 have at their ends a locking surface 118 and a projection 119 with which they can be braced on the edge of an aperture.

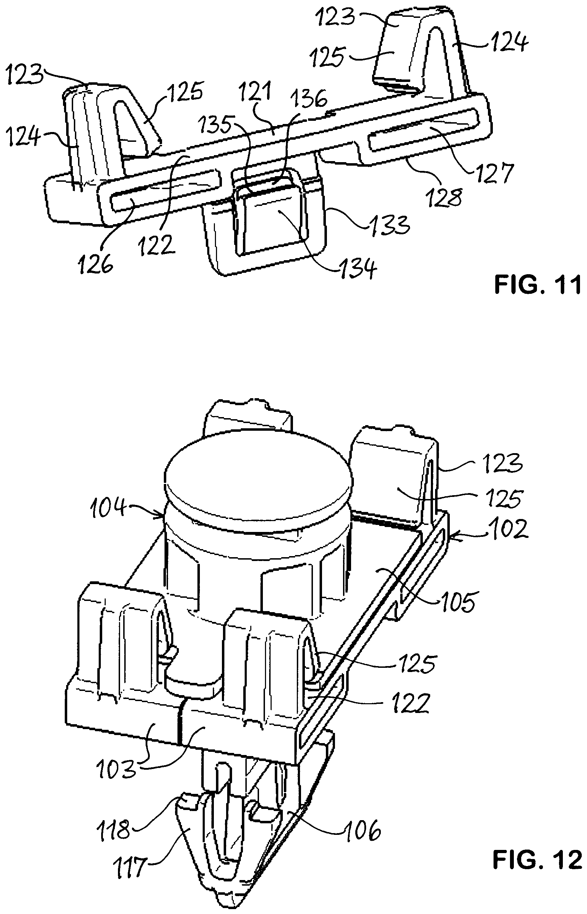

The receptacle part 102 is composed of the two identical parts 103, which can be assembled in a rotationally symmetric arrangement. Each part 103 consists of a rectangular, flat plate 121 that has a pair of catches 123 on the top 122. The catches 123 are arranged on the short sides of the plate and consist essentially of a rigid arm 124 projecting vertically from the plate and a flexible locking finger 125 extending at an acute angle from the free end of the rigid arm 124 toward the top 122. The locking fingers 125 are each located on the sides of the catches 123 facing one another, and have locking surfaces at their ends that are slightly inclined toward the top 122, as can be seen in Figure 11.

The end sections of the plate 121 on which the catches 123 are arranged are implemented as flat, rectangular tubes 126, 127 that are raised on the underside of the plate where they form flat supporting surfaces 128. One tube, the tube 126, is open at both ends. The tube 127 is closed at one end by a fastening tenon 129 that projects laterally from the plate 121 and that can be inserted into the tube 126 of the respective other receptacle part 103 and that has a locking finger 130 that can latch into a locking recess in the tube 126. The two parts 103 shown in Figure 9 can thus be connected to form the receptacle part 102 by inserting their fastening tenons 129 into the tubes 126 of the respective other part 103, as shown in Figure 12.

On the connection side, the part 103 has a recess 132 by means of which one half of the receiving aperture for accommodating the insertion part 104 in the receptacle part 102 is formed. Located at the edge of the recess 132, on the underside of the plate 121, is a frame 133 projecting vertically therefrom; arranged in the frame aperture thereof is a resiliently deflectable locking tab 134. On its side facing the plate 121, the locking tab 134 has a locking surface 135 and a stop rib 136 adjacent to the locking surface.

Figure 12 shows the fastener 101 in a position prepared for installation. The parts 103 are connected to one another, and form the receptacle part 102. In the receiving aperture of the receptacle part 102 that is formed by the recesses 132 of the two parts 103, the insertion part 104 has been inserted until its flange 105 rests against the top 122. The catches 123, which pass over the edges of the flange 105 during insertion, rest with their locking fingers 125 on the edges of the flange 105, and thereby secure the insertion part 104 on the receptacle part 102. The plug-in section 106 of the insertion part 104 projects out of the receptacle part 102 on the underside.

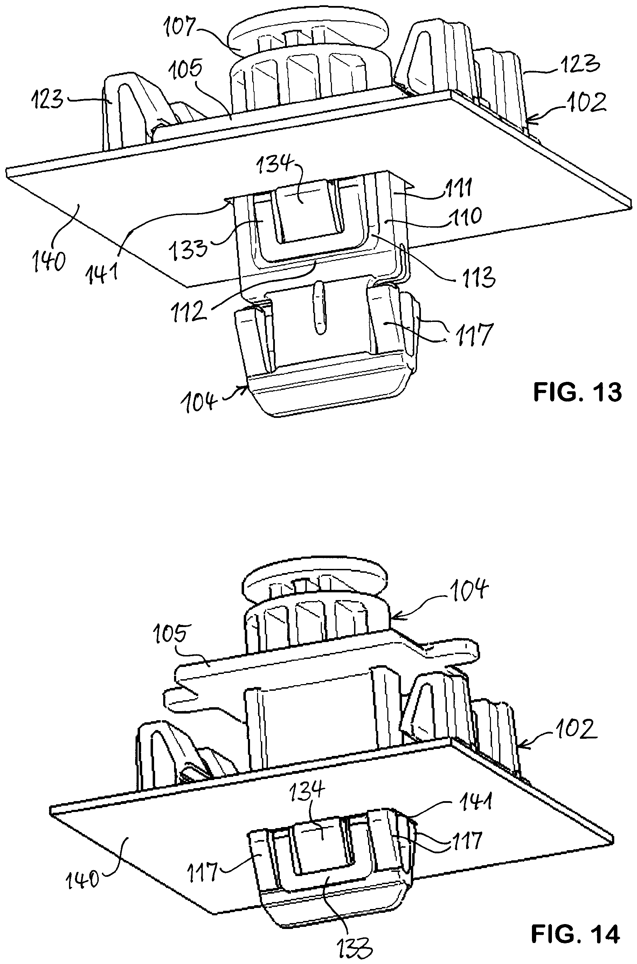

In order to attach a trim part to a support part, the fastener 101 can either be assembled first with a trim part and then with the support part, or can be assembled in the reverse order. The head 107 of the insertion part 104 serves to fasten the trim part. Fastening in the support part is accomplished with the aid of the receptacle part 102. As is shown in Figure 13, the support part 140, which takes the form of a thin-walled plate or sheet, is provided with a rectangular aperture 141 into which the fastener 101 is inserted with the plug-in section 106 foremost. After the receptacle part 102 and the insertion part 104 have been connected to one another, the frames 133 on the two parts 103 of the receptacle part 102 are located at the guide section 110 in the recesses between the guide strips 111, and are likewise inserted all the way through the aperture 141 of the support part 140. The locking tabs 134 located on the frame 133 are pressed toward the insertion part 104 during the insertion process by the edge of the aperture 141 and spring back to their initial position when the receptacle part 102 rests against the support part 140. During this process, the stop ribs 136 strike the edge of the aperture 141, thereby producing a clicking sound that indicates the correct seating of the fastener 101 in the support part 140. The locking tabs 134 come into engagement with the rear edge of the aperture 141 of the support part 140, thereby securing the fastener 101 on the support part 140.

Figure 13 also shows that the side of the frame 133 to which the locking tab 134 is affixed rests on the wedge surface 113 of the braking section 112. Therefore, the locking tab 134 can also brace against the braking section 112 when it is loaded by a force that tends to pull the fastener 101 out of the aperture 141.

The catches 123 that retain the insertion part 104 on the flange 105 are designed such that they can slide off the flange 105 when a certain release force pulls on the insertion part 104. Release should be possible so that a trim part attached to the insertion part 104 can be lifted away from the support part 140 by deployment of an airbag. If this case occurs, the insertion part 104 is displaced relative to the receptacle part 102 and support part 140 into the position shown in Figure 14. During displacement, the mutually opposing wedge surfaces 113 of the wedge-shaped braking section 112 are pressed against the sides of the frame 133 that are braced against the support part 140 by the locking tabs 134. The displacement of the insertion part 104 is braked by the resistance produced hereby, with which the sides of the frame 133 oppose the displacement of the braking section 112. In this process the braking section 112 presses the frames 133 apart in opposition to their resistance, and its bottom edge arrives in the region of the aperture 141, with it pressing the free ends of the locking tabs 134 and their stop ribs 136 against the inside edge of the aperture 141. At the same time, the locking fingers 117 at the free end of the insertion part 104 reach the support part 140 and secure the insertion part 104 in the displaced position on the support part 140. In this process, the locking fingers 117 engage with the aperture 141 by means of the projections 119, and are thereby secured in their locking position. The insertion part 104 is now securely fixed to the support part 140 in this displaced position and can thus prevent the trim part attached to it from being hurled away by the airbag.

## Claims

1. Fastener (1, 101) for two fastening states having a receptacle part (2, 102) that has a receiving aperture (3) and fastening means for attachment to a first component, having an insertion part (4, 104) with a pin-like plug-in section (45, 106) that can be inserted with an insertion end of the plug-in section (45, 106) foremost into the receiving aperture (3) of the receptacle part and that has, at a fastening end opposite the insertion end, fastening means for attaching a second component, wherein, in a first fastening state, the plug-in section (45, 106) of the insertion part (4, 104) is inserted deep into the receiving aperture (3) and the insertion part (4, 104) is releasably connectable to the receptacle part (2, 102) by latching first retaining means, and the first retaining means are designed such that the insertion part (4, 104) can be displaced by a release force into a second fastening state, wherein, in the second fastening state, the insertion part (4, 104) with plug-in section (45, 106) is arranged in the receiving aperture (3) to engage less deeply therewith and is securable in the receiving aperture (3) by second retaining means, **characterized in that** the receptacle part (2, 102) and the insertion part (4, 104) have cooperating brake means that produce a braking force that opposes the displacement during displacement of the insertion part (4, 104) from the first fastening state into the second fastening state.

2. Fastener according to claim 1, **characterized in that** the plug-in section (45, 106) has a wedge-shaped braking section (56, 112) that is tapered toward the fastening end, and **in that** a deformable section of the receptacle part (2, 102) bears against the wedge-shaped braking section (56, 112) in the first fastening state, which can be deformed by the wedge-shaped braking section (56, 112) during displacement of the insertion part into the second fastening state.

3. Fastener according to one of the preceding claims, **characterized in that** the plug-in section (45, 106) has resiliently deflectable locking fingers (53, 117) extending toward the fastening end that secure the insertion part (4, 104) against being pulled out of the receiving aperture (3) in one of the fastening states.

4. Fastener according to one of the preceding claims, **characterized in that** the insertion part (4, 104) has, between the plug-in section (45, 106) and the fastening end, a plate-like flange (46, 105) that bears against the receptacle part (2, 102) in the first fastening state and supports the insertion part (4, 104) on the receptacle part (2, 102) in the insertion direction.

5. Fastener according to claim 4, **characterized in that** the receptacle part (102) takes the form of a flat plate with the receiving aperture located in its center, wherein the plate has catches (123) that form first retaining means on one insertion side by which means the flange (105) of the insertion part (104) can be secured on the receptacle part (102).

6. Fastener according to one of the preceding claims, **characterized in that** the receptacle part (102) is composed of two identical parts (103) that have, on one face, connecting means (126, 129) that plug together.

7. Fastener according to one of the preceding claims, **characterized in that** the receptacle part (102) has, on a fastening side opposite the insertion side, retaining elements adjacent to the edge of the receiving aperture with resiliently deflectable locking fingers (134) that are intended to fasten the receptacle part (102) in the aperture of a component.

8. Fastener according to one of the preceding claims, **characterized in that** the receptacle part (2) has a housing with a chamber (7) into which the plug-in section (45) of the insertion part (4) can be inserted, wherein a resilient retaining element (8) is arranged in the chamber (7), by which means the plug-in section (45) of the insertion part (4) can be secured in the receptacle part (2) in the second fastening state.

9. Fastener according to claim 8, **characterized in that** the plug-in section (45) has a shoulder near the insertion end (49) with a locking surface (51) facing the fastening end, with which the plug-in section (45) is supported on the resilient retaining element (8) to keep it from being pulled out of the receptacle part (2) in the second fastening state.

10. Fastener according to claim 8, **characterized in that** the plug-in section (45) of the insertion part (4) extends all the way through the chamber (7) of the receptacle part (2) in the first fastening state and is supported on the housing (6) on the side of the housing (6) facing away from the insertion side by means of the resiliently deflectable locking fingers (53) to prevent release.

11. Fastener according to one of claims 8 to 10, **characterized in that** the resilient retaining element (8) is supported on the plug-in section (45) of the insertion part (4) and on the housing (6) in such a manner that when the insertion part (4) is displaced from the first fastening state into the second state, a braking force opposing its displacement can be produced at the insertion part (4).

12. Fastener according to one of claims 8 to 11, **characterized in that** the resilient retaining element (8) has a rigid, wedge-shaped clamping section (26) that extends transversely to the direction of insertion along an edge of the insertion aperture (3) and that has wedge surfaces (27, 28) on the side facing the insertion aperture (3) and a contact surface (30) for the insertion part (4) on the opposite side, wherein the clamping section (26) can be inserted into a gap between the plug-in section (45) of the insertion part (4) and the edge of the insertion aperture (3), and is designed to cause a clamping of the plug-in section (45) in the insertion aperture (3) opposing the displacement of the plug-in section (45).

13. Fastener according to one of claims 8 to 12, **characterized in that** the resilient retaining element (8) has two wedge-shaped clamping sections (26) in a symmetrical parallel arrangement, which are connected to each other by spring elements at both their ends, wherein an aperture (38) into which the plug-in section (45) of the insertion part (4) can be inserted is formed between the clamping sections (26) and the spring elements.

14. Fastener according to one of claims 8 to 13, **characterized in that** the resilient retaining element (8) has resilient arms (40, 41) on opposite sides that each extend outward from the ends of the clamping sections (26) and toward one another, whose adjacent ends engage with retention apertures (43) in opposite walls of the chamber (7) and hold the retaining element (8) in contact with a rearward wall (11) of the chamber in the direction of insertion.

15. Fastener according to claim 14, **characterized in that** the resilient arms (40, 41) form a triangle with the clamping section (26) adjacent to them.

16. Fastener according to one of the preceding claims, **characterized in that** the insertion part (4) can be secured in the insertion aperture (3) of the receptacle part (2) by the second retaining means with a retention force that exceeds the retention force of the first retaining means.

## Patentansprüche

1. Befestigungsvorrichtung (1, 101) für zwei Befestigungszustände mit einem Aufnahmeteil (2, 102), das eine Aufnahmeöffnung (3) und Befestigungsmittel zur Befestigung an einem ersten Bauteil aufweist, einem Einsteckteil (4, 104) mit einem stiftartigen Steckabschnitt (45, 106), das mit einem Einsteckende des Steckabschnitts (45, 106) voran in die Aufnahmeöffnung (3) des Aufnahmeteils einsteckbar ist und an einem dem Einsteckende entgegengesetzten Befestigungsende Befestigungsmittel zur Befestigung eines zweiten Bauteils aufweist, wobei in einem ersten Befestigungszustand der Steckabschnitt (45, 106) des Einsteckteils (4, 104) tief in die Aufnahmeöffnung (3) eingesteckt ist und das Einsteckteil (4, 104) mit dem Aufnahmeteil (2, 102) durch einrastende erste Haltemittel lösbar verbindbar ist und die ersten Haltemittel so ausgebildet sind, dass das Einsteckteil (4, 104) durch eine Lösekraft in einen zweiten Befestigungszustand verlagerbar ist, wobei das Einsteckteil (4, 104) in dem zweiten Befestigungszustand mit dem Steckabschnitt (45, 106) weniger tief in die Aufnahmeöffnung (3) eingreifend in dieser angeordnet ist und durch zweite Haltemittel in der Aufnahmeöffnung (3) festgehaltbar ist **dadurch gekennzeichnet, dass** das Aufnahmeteil (2, 102) und das Einsteckteil (4, 104) zusammenwirkende Bremsmittel aufweisen, die bei Verlagerung des Einsteckteils (4, 104) von dem ersten in den zweiten Befestigungszustand eine der Verlagerung entgegenwirkende Bremskraft erzeugen.

2. Befestigungsvorrichtung nach Anspruch 1, **dadurch gekennzeichnet, dass** der Steckabschnitt (45, 106) einen keilförmigen Bremsabschnitt (56, 112) aufweist, der in Richtung des Befestigungsendes verjüngt ist, und dass in dem ersten Befestigungszustand ein verformbarer Abschnitt des Aufnahmeteils (2, 102) an dem keilförmigen Bremsabschnitt (56, 112) anliegt, der bei Verlagerung des Einsteckteils in den zweiten Befestigungszustand durch den keilförmigen Bremsabschnitt (56, 112) verformbar ist.

3. Befestigungsvorrichtung nach einem der vorhergehenden Ansprüche, **dadurch gekennzeichnet, dass** der Steckabschnitt (45, 106) sich in Richtung des Befestigungsendes erstreckende, federnd auslenkbare Sperrfinger (53, 117) aufweist, die das Einsteckteil (4, 104) in einem der Befestigungszustande gegen Herausziehen aus der Aufnahmeöffnung (3) festhalten.

4. Befestigungsvorrichtung nach einem der vorhergehenden Ansprüche, **dadurch gekennzeichnet, dass** das Einsteckteil (4, 104) zwischen dem Steckabschnitt (45, 106) und dem Befestigungsende einen plattenförmigen Flansch (46, 105) aufweist, der in dem ersten Befestigungszustand an dem Aufnahmeteil (2, 102) anliegt und das Einsteckteil (4, 104) in Einsteckrichtung an dem Aufnahmeteil (2, 1 02) abstützt.

5. Befestigungsvorrichtung nach Anspruch 4, **dadurch gekennzeichnet, dass** das Aufnahmeteil (102) die Form einer ebenen Platte hat, in deren Mitte die Aufnahmeöffnung liegt, wobei die Platte auf einer Einsteckseite die ersten Haltemittel bildende Schnapper (123) aufweist, durch die der Flansch (105) des Einsteckteils (104) an dem Aufnahmeteil (102) festhaltbar ist.

6. Befestigungsvorrichtung nach einem der vorhergehenden Ansprüche, **dadurch gekennzeichnet, dass** das Aufnahmeteil (102) aus zwei identischen Teilen (103) zusammengesetzt ist, die an einer Stirnseite ineinander steckbare Verbindungsmittel (126, 129) aufweisen.

7. Befestigungsvorrichtung nach einem der vorhergehenden Ansprüche, **dadurch gekennzeichnet, dass** das Aufnahmeteil (102) auf einer der Einsteckseite entgegengesetzten Befestigungsseite an den Rand der Aufnahmeöffnung angrenzende Halteelemente mit federnd auslenkbaren Sperrfingern (134) aufweist, die zur Befestigung des Aufnahmeteils (102) in der Öffnung eines Bauteils bestimmt sind.

8. Befestigungsvorrichtung nach einem der vorhergehenden Ansprüche, **dadurch gekennzeichnet, dass** das Aufnahmeteil (2) ein Gehäuse mit einer Kammer (7) aufweist, in die der Steckabschnitt (45) des Einsteckteils (4) einsteckbar ist, wobei in der Kammer (7) ein federndes Halteelement (8) angeordnet ist, durch das der Steckabschnitt (45) des Einsteckteils (4) in dem zweiten Befestigungszustand in dem Aufnahmeteil (2) festhaltbar ist.

9. Befestigungsvorrichtung nach Anspruch 8, **dadurch gekennzeichnet, dass** der Steckabschnitt (45) nahe dem Einsteckende (49) eine Schulter mit einer dem Befestigungsende zugewandten Sperrfläche (51) aufweist, mit der der Steckabschnitt (45) in dem zweiten Befestigungszustand an dem federnde Halteelement (8) gegen Herausziehen aus dem Aufnahmeteil (2) abgestützt ist.

10. Befestigungsvorrichtung nach Anspruch 8, **dadurch gekennzeichnet, dass** der Steckabschnitt (45) des Einsteckteils (4) sich im ersten Befestigungszustand durch die Kammer (7) des Aufnahmeteils (2) hindurch erstreckt und auf der der Einsteckseite abgewandten Seite des Gehäuses (6) mittels der federnd auslenkbaren Sperrfinger (53) gegen Lösen an dem Gehäuse (6) abgestützt ist.

11. Befestigungsvorrichtung nach einem der Ansprüche 8 bis 10, **dadurch gekennzeichnet, dass** das federnde Halteelement (8) an dem Steckabschnitt (45) des Einsteckteils (4) und dem Gehäuse (6) derart abstützbar ist, dass bei Verlagerung des Einsteckteils (4) von dem ersten in den zweiten Befestigungszustand an dem Einsteckteil (4) eine seiner Verlagerung entgegenwirkende Bremskraft erzeugbar ist.

12. Befestigungsvorrichtung nach einem der Ansprüche 8 bis 11, **dadurch gekennzeichnet, dass** das federnde Halteelement (8) einen steifen keilförmigen Klemmabschnitt (26) aufweist, der sich quer zur Einsteckrichtung längs eines Randes der Einstecköffnung (3) erstreckt und der auf der der Einstecköffnung (3) zugewandten Seite Keilflächen (27, 28) und auf der entgegengesetzten Seite eine Anlagefläche (30) für das Einsteckteil (4) aufweist, wobei der Klemmabschnitt (26) in einen Spalt zwischen den Steckabschnitt (45) des Einsteckteils (4) und den Rand der Einführöffnung (3) einfuhrbar und dazu ausgebildet ist, eine der Verlagerung des Steckabschnitts (45) entgegenwirkende Klemmung des Steckabschnitts (45) in der Einführöffnung (3) zu bewirken.

13. Befestigungsvorrichtung nach einem der Ansprüche 8 bis 12, **dadurch gekennzeichnet, dass** das federnde Halteelement (8) in paralleler symmetrischer Anordnung zwei keilförmigen Klemmabschnitte (26) aufweist, die an ihren beiden Enden jeweils durch Federelemente miteinander verbunden sind, wobei zwischen den Klemmabschnitten (26) und den Federelementen eine Öffnung (38) gebildet ist, in die der Steckabschnitt (45) des Einsteckteils (4) einsteckbar ist.

14. Befestigungsvorrichtung nach einem der Ansprüche 8 bis 13, **dadurch gekennzeichnet, dass** das federnde Halteelement (8) auf entgegengesetzten Seiten jeweils sich von den Enden der Klemmabschnitte (26) nach außen und zueinander erstreckende Federarme (40, 41) aufweist, deren benachbarte Enden in Halteöffnungen (43) in gegenüber liegenden Wänden der Kammer (7) eingreifen und das Halteelement (8) in Anlage an einer in Einsteckrichtung hinteren Wand (11) der Kammer halten.

15. Befestigungsvorrichtung nach Anspruch 14, **dadurch gekennzeichnet, dass** die Federarme (40, 41) mit dem an sie angrenzenden Klemmabschnitt (26) ein Dreieck bilden.

16. Befestigungsvorrichtung nach einem der vorhergehenden Ansprüche, **dadurch gekennzeichnet, dass** das Einsteckteil (4) durch die zweiten Haltemittel mit einer die Haltekraft, die die Haltekraft der ersten Haltemittel übersteigt, in der Aufnahmeöffnung (3) des Aufnahmeteils (2) festhaltbar ist.

## Revendications

1. Élément de fixation (1, 101) pour deux états de fixation ayant une partie de réceptacle (2, 102) qui a une ouverture de réception (3) et un moyen de fixation pour attacher un premier composant, ayant une partie d'insertion (4, 104) avec une section enfichable de type broche (45, 106) qui peut être insérée avec une extrémité d'insertion de la section enfichable (45, 106) le plus en avant dans l'ouverture de réception (3) de la partie de réceptacle et qui a, au niveau d'une extrémité de fixation opposée à l'extrémité d'insertion, un moyen de fixation pour attacher un second composant, dans lequel, dans un premier état de fixation, la section enfichable (45, 106) de la partie d'insertion (4, 104) est insérée profondément dans l'ouverture de réception (3) et la partie d'insertion (4, 104) peut être raccordée de façon libérable à la partie de réceptacle (2, 102) en verrouillant des premiers moyens de retenue, et les premiers moyens de retenue sont conçus de sorte que la partie d'insertion (4, 104) puisse être déplacée par une force de libération dans un second état de fixation, dans lequel, dans le second état de fixation, la partie d'insertion (4, 104) avec la section enfichable (45, 106) est agencée dans l'ouverture de réception (3) pour s'engager moins profondément avec celle-ci et peut être arrimée dans l'ouverture de réception (3) par des seconds moyens de retenue, **caractérisé en ce que** la partie de réceptacle (2, 102) et la partie d'insertion (4, 104) ont des moyens de frein coopérants qui produisent une force de freinage qui s'oppose au déplacement pendant un déplacement de la partie d'insertion (4, 104) depuis le premier état de fixation dans le second état de fixation.

2. Élément de fixation selon la revendication 1, **caractérisé en ce que** la section enfichable (45, 106) a une section de freinage en forme de coin (56, 112) qui est effilée vers l'extrémité de fixation, et **en ce qu'**une section déformable de la partie de réceptacle (2, 102) appuie contre la section de freinage en forme de coin (56, 112) dans le premier état de fixation, qui peut être déformée par la section de freinage en forme de coin (56, 112) pendant un déplacement de la partie d'insertion dans le second état de fixation.

3. Élément de fixation selon l'une des revendications précédentes, **caractérisé en ce que** la section enfichable (45, 106) a des doigts de blocage déviables de façon résiliente (53, 117) s'étendant vers l'extrémité de fixation qui arriment la partie d'insertion (4, 104) pour empêcher son retrait de l'ouverture de réception (3) dans l'un des états de fixation.

4. Élément de fixation selon l'une des revendications précédentes, **caractérisé en ce que** la partie d'insertion (4, 104) a, entre la section enfichable (45, 106) et l'extrémité de fixation, une bride de type plaque (46, 105) qui appuie contre la partie de réceptacle (2, 102) dans le premier état de fixation et supporte la partie d'insertion (4, 104) sur la partie de réceptacle (2, 102) dans la direction d'insertion.

5. Élément de fixation selon la revendication 4, **caractérisé en ce que** la partie de réceptacle (102) prend la forme d'une plaque plate avec l'ouverture de réception située en son centre, dans lequel la plaque a des loquets (123) qui forment des premiers moyens de retenue sur un côté d'insertion moyens par le biais desquels la bride (105) de la partie d'insertion (104) peut être arrimée sur la partie de réceptacle (102).

6. Élément de fixation selon l'une des revendications précédentes, **caractérisé en ce que** la partie de réceptacle (102) est composée de deux parties identiques (103) qui ont, sur une face, des moyens de raccordement (126, 129) qui s'enfichent ensemble.

7. Élément de fixation selon l'une des revendications précédentes, **caractérisé en ce que** la partie de réceptacle (102) a, sur un côté de fixation opposé au côté d'insertion, des éléments de retenue adjacents au bord de l'ouverture de réception avec des doigts de blocage déviables de façon résiliente (134) qui sont destinés à fixer la partie de réceptacle (102) dans l'ouverture d'un composant.

8. Élément de fixation selon l'une des revendications précédentes, **caractérisé en ce que** la partie de réceptacle (2) a un logement avec une chambre (7) dans laquelle la section enfichable (45) de la partie d'insertion (4) peut être insérée, dans lequel un élément de retenue résilient (8) est agencé dans la chambre (7), moyen par lequel la section enfichable (45) de la partie d'insertion (4) peut être arrimée dans la partie de réceptacle (2) dans le second état de fixation.

9. Élément de fixation selon la revendication 8, **caractérisé en ce que** la section enfichable (45) a un épaulement près de l'extrémité d'insertion (49) avec une surface de blocage (51) en regard de l'extrémité de fixation, avec lequel la section enfichable (45) est supportée sur l'élément de retenue résilient (8) pour l'empêcher d'être retirée de la partie de réceptacle (2) dans le second état de fixation.

10. Élément de fixation selon la revendication 8, **caractérisé en ce que** la section enfichable (45) de la partie d'insertion (4) s'étend tout le long de la chambre (7) de la partie de réceptacle (2) dans le premier état de fixation et est supportée sur le logement (6) sur le côté du logement (6) orienté à l'opposé du côté d'insertion au moyen des doigts de blocage déviables de façon résiliente (53) pour empêcher une libération.

11. Élément de fixation selon l'une des revendications 8 à 10, **caractérisé en ce que** l'élément de retenue résilient (8) est supporté sur la section enfichable (45) de la partie d'insertion (4) et sur le logement (6) de manière à ce que, lorsque la partie d'insertion (4) est déplacée depuis le premier état de fixation dans le second état, une force de freinage s'opposant à son déplacement puisse être produite au niveau de la partie d'insertion (4).

12. Élément de fixation selon l'une des revendications 8 à 11, **caractérisé en ce que** l'élément de retenue résilient (8) a une section de serrage en forme de coin rigide (26) qui s'étend de façon transversale à la direction d'insertion le long d'un bord de l'ouverture d'insertion (3) et qui a des surfaces de coin (27, 28) sur le côté en regard de l'ouverture d'insertion (3) et une surface de contact (30) pour la partie d'insertion (4) sur le côté opposé, dans lequel la section de serrage (26) peut être insérée dans un écartement entre la section enfichable (45) de la partie d'insertion (4) et le bord de l'ouverture d'insertion (3), et est conçue pour provoquer un serrage de la section enfichable (45) dans l'ouverture d'insertion (3) s'opposant au déplacement de la section enfichable (45).

13. Élément de fixation selon l'une des revendications 8 à 12, **caractérisé en ce que** l'élément de retenue résilient (8) a deux sections de serrage en forme de coin (26) dans un agencement parallèle symétrique, qui sont raccordées l'une à l'autre par des éléments de ressort au niveau de leurs deux extrémités, dans lequel une ouverture (38) dans laquelle la section enfichable (45) de la partie d'insertion (4) peut être insérée est formée entre les sections de serrage (26) et les éléments de ressort.

14. Élément de fixation selon l'une des revendications 8 à 13, **caractérisé en ce que** l'élément de retenue résilient (8) a des bras résilients (40, 41) sur des côtés opposés qui s'étendent chacun vers l'extérieur depuis les extrémités des sections de serrage (26) et l'un vers l'autre, dont des extrémités adjacentes s'engagent avec des ouvertures de rétention (43) dans des parois opposées de la chambre (7) et maintiennent l'élément de retenue (8) en contact avec une paroi arrière (11) de la chambre dans la direction d'insertion.

15. Élément de fixation selon la revendication 14, **caractérisé en ce que** les bras résilients (40, 41) forment un triangle avec la section de serrage (26) adjacente à ceux-ci.

16. Élément de fixation selon l'une des revendications précédentes, **caractérisé en ce que** la partie d'insertion (4) peut être arrimée dans l'ouverture d'insertion (3) de la partie de réceptacle (2) par les seconds moyens de retenue avec une force de rétention qui dépasse la force de rétention des premiers moyens de retenue.
